# EUROPÄISCHE PATENTSCHRIFT

(11) **EP 0 924 640 B1**
(45) Veröffentlichungstag und Bekanntmachung des Hinweises auf die Patenterteilung: **18.05.2005**
(21) Anmeldenummer: 98122337.3
(22) Anmeldetag: 25.11.1998
(51) Int. Cl.: G06K 7/00

(54) **Adapter zum Kontaktieren von Chipkarten**
Adapter for contacting of smart cards
Adaptateur pour le contact de cartes à puce

(30) Priorität: 16.12.1997 DE 29722142 U
(43) Veröffentlichungstag der Anmeldung: 23.06.1999
(73) Patentinhaber: STOCKO Contact GmbH & Co. KG, 42327 Wuppertal (DE)
(72) Erfinder: Klatt, Dieter, 42489 Wülfrath (DE); Ungermann, Heinz, 63389 Linsengericht (DE); Pelke, Bernhard, 42119 Wuppertal (DE); Bäcker, Arnd, 53940 Hellenthal (DE); Klenner, Thomas, 53940 Hellenthal (DE)
(74) Vertreter: Stenger, Watzke & Ring Patentanwälte

(56) Entgegenhaltungen:
- EP-A- 0 675 456
- EP-A- 0 704 813
- EP-A- 0 724 226
- WO-A-97/39418

## Beschreibung

Die Erfindung betrifft einen Adapter zum Kontaktieren von Chipkarten gemäß dem Oberbegriff des Anspruchs 1.

Unter einer Chipkarte in voranstehenden Sinne werden kartenförmige Trägerelemente elektronischer Bauteile, insbesondere von Mikroprozessoren, auf denen verschiedene, abrufbare Informationen gespeichert werden können, verstanden. Derartige Chipkarten sind insbesondere im Bereich der Computertechnologie anzutreffen und erfreuen sich einer immer stärker werdenden Verbreitung im Zusammenhang mit der Authentifikation von Subjekten. Neben dieser Verwendung als Identitätskarte für zum Beispiel die Bedienung von Zugangskontrollsystemen, werden Chipkarten derzeit zunehmend auch im bargeldlosen Zahlungsverkehr eingesetzt, wo sie beispielsweise bei Kreditkarten oder im Rahmen von POS-Systemen die Magnetstreifenkarte ablösen.

Zum Lesen einer Chipkarte sind als Kontaktiereinheit ausgebildete Leseeinheiten bekannt, die in Form eines Adaptersystems beispielsweise ermöglichen, eine Chipkarte an einen nach PCMCIA-Standard genormten Anschluß eines Datenverarbeitungssystems anzuschließen. Die im Stand der Technik hierzu bekannten Adapter weisen eine PCMCIA-Steckanschlußbuchse auf, die mit einem PCMCIA-Steckplatz des Datenverarbeitungssystems eine mechanische und elektrische Kontaktierung bewirkt. Das Auslesen der Chipkarte erfolgt dabei über im Aufnahmekanal für die Chipkarte angeordnete Kontaktelemente, welche dieselbe berührend oder, beispielsweise auf optischem oder magnetischem Weg, berührungslos kontaktieren.

Aus der DE 295 05 678 ist eine Kontaktiereinheit für kartenförmige Trägerelemente elektronischer Baugruppen bekannt, die mit einer Basisplatte mit einer zur planparallelen Aufnahme eines kartenförmigen Trägerelementes geeigneten Größe, wenigstens einer im wesentlichen parallel zur Basisplatte angeordneten Leiterplatte mit Kontaktelementen für die elektronischen Baugruppen des Trägerelementes an ihrer Oberfläche sowie mit einem an einer Kante der Basisplatte angeordneten Anschlußfeld versehen ist. Ein zur Basisplatte im wesentlichen deckungsgleiches, plattenförmiges Abdeckelement bildet mit der Leiterplatte einen schlitzartigen Einschubkanal und ist im Bereich des Anschlußfeldes und der dieser gegenüberliegenden Ecken an der Basisplatte befestigt. Die Befestigung im Bereich des Anschlußfeldes erfolgt dabei über zwei seitlich des Anschlußfeldes verlaufende Stege, die einstückig mit der Basisplatte und dem Abdeckelement verbunden sind. Als Nachteil hierbei erweist sich, daß eine derartige Bauform nur mit großem wirtschaftlichen Aufwand herstellbar ist und sich daher nur bedingt für eine billige Massenproduktion eignet. Ursächlich hierfür ist die einstückige Bauweise von Basisplatte und Abdeckelement, die eine zeitaufwendige und damit ungünstige Montage mit sich bringt. Zudem ist die Auswahl der verwendbaren Materialien beschränkt, da das Abdeckelement über die Stege um das Anschlußfeld auf die Unterseite der Kontaktiereinheit umgebogen wird, so daß eine gewisse Biegsamkeit für ein zu verwendendes Material vorausgesetzt sein muß.

EP-A-0 704 813 beschreibt einen ähnlichen Adapter, welcher die Merkmale gemäß dem Oberbegriff des Anspruchs 1 aufweist.

Der Erfindung liegt die **Aufgabe** zugrunde, einen Adapter zum Kontaktieren von Chipkarten mit einem vorzugsweise nach PCMCIA-Standard genormten Anschluß eines Datenverarbeitungsgeräts oder dergleichen dahingehend weiterzubilden, daß sich eine einfache und kostengünstige Herstellung erreichen läßt, die eine wirtschaftliche Massenproduktion im Hinblick auf die zunehmend umfangreichere Verwendung vorbeschriebener Kartensysteme gewährleistet.

Die Aufgabe ist bei einem Adapter der eingangs genannten Art erfindungsgemäß durch die kennzeichnenden Merkmale des Anspruchs 1 gelöst.

Ein solchermaßen ausgestalteter Adapter läßt sich einfach und kostengünstig herstellen und gestattet daher eine Massenproduktion im zuvor erwähnten Sinn. Dies ist darauf zurückzuführen, daß sich zum einen aufgrund der zweiteiligen Ausgestaltung mit oberer und unterer Abdeckplatte eine einfache Montage ergibt und zum anderen infolge des Verbindens der Abdeckplatten über die Zwischenelemente eine bedarfsgerechte Verwendung auch unterschiedlichster Materialien mit geringem fertigungstechnischen Aufwand erreichen läßt. Mögliche Anwendungsgebiete für Letztgenanntes können beispielsweise in der bedarfsabhängigen Verwendung nichtleitender oder leitender Materialien für die Abdeckplatten hinsichtlich einer geforderten Abschirmung, statischen Ableitung und dergleichen bestehen.

In einer bevorzugten Ausführungsform ist die obere Abdeckplatte mit einem oberen und die untere Abdeckplatte mit unteren Zwischenelementen versehen, die an ihren gegenüberliegenden Berührungsflächen miteinander verbunden sind. Dies bietet den Vorteil, daß die jeweiligen Abdeckplatten und dazugehörigen Zwischenelemente vorgefertigt werden können, so daß nach erfolgter Bestückung mit Leiterplatte und Anschlußfeld eine einfache Verbindung der gleichartigen oberen und unteren Zwischenelemente möglich ist. Zu diesem Zweck wird weiterhin vorgeschlagen, daß an dem oberen und den unteren Zwischenelementen korrespondierend ausgebildete Zapfen und Öffnungen angeordnet sind, um eine einfache und schnelle Zentrierung der aufeinander anzuordnenden Zwischenelemente zu erzielen, die anschließend mittels Ultraschallschweißen, Kleben oder sonstigem Stoffschluß miteinander verbunden werden können.

Gemäß einer alternativen Weiterbildung der Erfindung sind das obere und die unteren Zwischenelemente mit korrespondierend ausgebildeten Zapfen und Öffnungen in Form einer Steckverbindung versehen und lösbar miteinander verbunden. Auf diese Weise ist eine einfache Trennung von oberer und unterer Abdeckplatte über die Zwischenelemente sichergestellt, was ein einfaches Zerlegen eines Adapters beispielsweise im Zusammenhang mit Recycling gewährleistet.

Gemäß einem weiteren vorteilhaften Merkmal sind das obere und die unteren Zwischenelemente Kunststoff-Spritzteile, die mittels Spritzgießen an der jeweiligen oberen und unteren Abdeckplatte befestigbar sind, so daß sich sowohl eine einfache und kostengünstige Herstellung der Zwischenelemente als auch eine zuverlässige Verbindung letztgenannter mit den Abdeckplatten erzielen läßt. Zweckmäßigerweise sind hierzu die obere und die untere Abdeckplatte jeweils mit angeformten Krampen versehen, die in dem oberen und den jeweiligen unteren Zwischenelementen eingegossen sind, um eine zuverlässige, stoffschlüssige Verbindung zu gewährleisten.

Gemäß einem weiteren Merkmal der Erfindung ist das obere Zwischenelement als im wesentlichen U-förmiger Rahmen ausgebildet, dessen Außenkontur der der oberen Abdeckplatte folgt und dessen Innenkontur Klemm- und Führungsabschnitte zur Aufnahme der Leiterplatte zwischen den beiden Schenkeln des Rahmens aufweist. Dies bietet den Vorteil einer Erhöhung der Verwindungssteifigkeit des Adapters, indem zum Beispiel die Schenkel des Rahmens Teile der seitlichen Wandungen des Gehäuses bilden. Durch die Ausgestaltung der Innenkontur der Schenkeln mit Klemm- und Führungsabschnitte zur Aufnahme der Leiterplatte wird zudem einen hohe Funktionsintegration erreicht. Um eine möglichst genaue Führung und sichere Kontaktierung einer Chipkarte im Adapter sicherzustellen - was eine annähernd gleiche Höhe von Chipkarte und Aufnahmekanal erfordert -, gleichzeitig aber auch ein einfaches und schnelles Einführen einer Chipkarte in den Adapter zu gewährleisten, ist gemäß einer weiteren vorteilhaften Ausgestaltung der Erfindung die dem Aufnahmekanal zugewandte Fläche der im Bereich des Einschubschlitzes angeordneten Basis des Rahmens an einer Seite mit einer flächigen Ausnehmung versehen. Dies gestattet ein etwas schräges und damit einfaches Einführen einer Chipkarte in den Einschubschlitz des Adapters.

Von besonderem Vorteil ist es, wenn die unteren Zwischenelemente annähernd die Höhe einer Chipkarte aufweisende Abstandssegmente sind, die einerseits im in Einschubrichtung einer Chipkarte vorderen Bereich des Gehäuses geschlossene seitliche Wandungen des Einschubschlitzes bilden und andererseits unter seitlichem Freilassen des sich an den Einschubschlitz anschließenden Aufnahmekanals beidseitig des Anschlußfelds angeordnet sind. Auf diese Weise wird eine sichere Führung und Kontaktierung einer Chipkarte im Adapter sichergestellt. Gleichzeitig ermöglicht das seitliche Freilassen nach PCMCIA-Standard vom Typ I, II, III oder IV genormte Abmessungen des steckkartenförmigen Gehäuses.

Um die Robustheit des Adapters zu erhöhen, ist gemäß einer weiteren vorteilhaften Weiterbildung der Erfindung das im Bereich des Einschubschlitzes angeordnete Abstandssegment einstückig mit einer Bodenplatte ausgebildet, deren Außenkontur der der unteren Abdeckplatte entspricht. Zu dem gleichen Zweck wird weiterhin vorgeschlagen, daß die untere Abdeckplatte mit einer Vertiefung versehen ist, in der eine vorzugsweise metallene Verstärkungsplatte angeordnet ist. In einer bevorzugten Ausführungsform der Erfindung sind die Abstandssegmente hierzu einstückig mit einer zur unteren Abdeckplatte deckungsgleichen Bodenplatte ausgebildet. Dies besitzt den Vorteil einer zeitgleichen Herstellung von Abdeckplatte und verstärkend wirkender Bodenplatte, so daß ein zusätzliches Anbringen der Verstärkungsplatte entfallen kann.

Gemäß einem weiteren Merkmal der Erfindung weisen die beidseitig des Anschlußfeldes angeordneten Abstandssegmente an ihren gegenüberliegenden Innenflächen Klemmabschnitte zur Fixierung des Anschlußfeldes auf, so daß eine einfache und schnelle Montage gewährleistet ist. Zweckmäßigerweise ist das im Bereich des Einschubschlitzes angeordnete Abstandssegment mit Einlaufschrägen für eine einzuführende Chipkarte und die beidseitig des Anschlußfeldes angeordneten Abstandssegmente mit die Einstecktiefe einer Chipkarte eckseitig begrenzenden Anschlägen, welche eine an die Eckenform der Chipkarte angepaßte Kontur aufweisen, versehen. Durch diese Maßnahme ist ein einfaches Einführen einer Chipkarte und ein sicherer Sitz derselben im Aufnahmekanal des Adapters gewährleistet.

Um eine ergonomisch günstige Handhabung des Adapters zu gewährleisten, wird gemäß einem weiteren vorteilhaften Merkmal der Erfindung vorgeschlagen, daß die obere Abdeckplatte an der den Einschubschlitz aufweisenden Stirnseite eine durch mehrere zurückspringende, teilkreisförmige Aussparungen gebildete Kontur aufweist. Die ergonomische Handhabung wird weiterhin dadurch begünstigt, daß die untere Abdeckplatte an der den Einschubschlitz aufweisenden Stirnseite in zumindest einem der beiden äußeren, teilkreisförmigen Aussparungen der oberen Abdeckplatte gegenüberliegenden Bereich eine nach Art einer Unterlippe hervorgezogene Fläche aufweist, auf der wenigstens ein Klemmnocken angeordnet ist, durch den zusammen mit den an den Abstandssegmenten ausgebildeten Anschlägen die Chipkarte sicherbar ist. Dies trägt auch dazu bei, daß die Kontaktsicherheit erheblich erhöht wird.

Schließlich wird vorgeschlagen, daß die obere und die untere Abdeckplatte aus Metall gefertigt sind, um neben einer guten Abschirmung auch eine robuste und langlebige Bauweise zu erzielen.

Weitere Merkmale und Vorteile des Gegenstandes der Erfindung ergeben sich aus der nachfolgenden Beschreibung eines bevorzugten Ausführungsbeispieles. In den zugehörigen Zeichnungen zeigen:
- Fig. 1: in einer perspektivischen Ansicht einen Adapter und eine Chipkarte;
- Fig. 2: eine Explosionsdarstellung von einer oberen und einer unteren Abdeckplatte mit jeweils zugehörigen Zwischenelementen;
- Fig. 3: in einer perspektivischen Ansicht eine mit einem Anschlußfeld versehene Leiterplatte sowie mit den Zwischenelementen verbundene obere und untere Abdeckplatte und
- Fig. 4: eine Explosionsdarstellung von oberer und unterer Abdeckplatte mit zugehörigen Zwischenelementen in einer alternativen Ausführungsform.

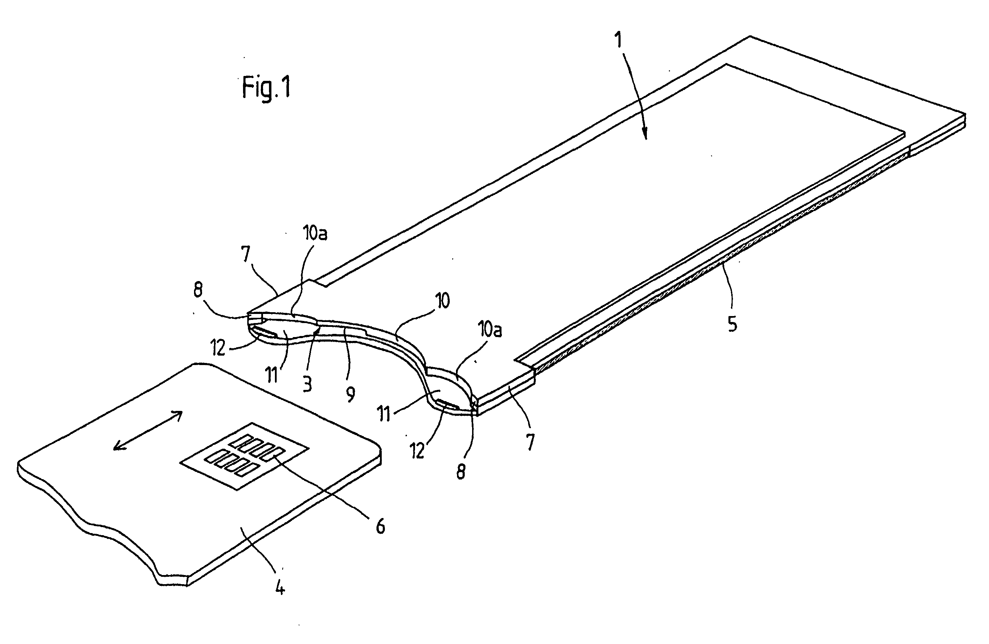

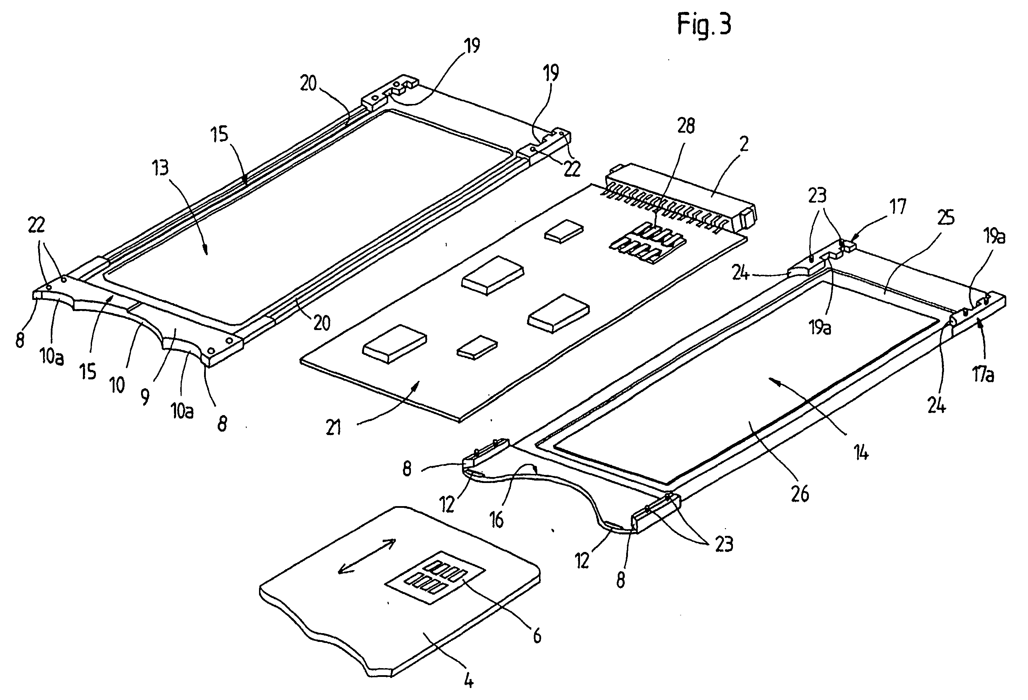

Der in Fig. 1 dargestellte Adapter weist ein Gehäuse 1 auf, dessen Abmessungen denen einer PCMCIA-Steckkarte vom Typ II entsprechen. Das Gehäuse 1 ist an seiner schmäleren Stirnseite mit einer PCMCIA-Steckanschlußbuchse 2 versehen, die - wie aus Fig. 3 ersichtlich - vollkommen im Gehäuse 1 untergebracht ist. Das Gehäuse 1 weist an der der Steckanschlußbuchse 2 gegenüberliegenden Stirnseite einen Einschubschlitz 3 für eine Chipkarte 4 auf, der in einen seitlich offenen Aufnahmekanal 5 übergeht. Die Chipkarte 4 ist mit einem flächigen Kontaktfeld 6 versehen und läßt sich in Richtung des gezeigten Doppelpfeiles in das Gehäuse 1 einführen bzw. herausziehen.

Zum besseren Einführen der Chipkarte 4 sind die seitlichen Wandungen 7 im Bereich des Einschubschlitzes 3 mit stirnseitigen Einlaufschrägen 8 und die dem Aufnahmekanal 5 zugewandte Deckenfläche mit einer ein schräges Einführen gestattenden Ausnehmung 9 versehen. Eine leichte Entnahme einer eingeschobenen Chipkarte 4 wird durch mehrere zurückspringende, teilkreisförmige Aussparungen 10, 10a an der Kontur der den Einschubschlitz 3 aufweisenden Stirnseite sowie den Aussparungen 10a gegenüberliegenden, nach Art einer Unterlippe hervorgezogenen Flächen 11 gewährleistet, die einem Benutzer einen günstigen Zugriff zur Chipkarte 4 ermöglichen. Die Flächen 11 dienen gleichzeitig als Abstützflächen der Chipkarte 4 beim Einführen, wodurch dieses erheblich vereinfacht wird. Um eine Verriegelung einer eingeschobenen Chipkarte 4 zu erreichen, sind die Flächen 11 zudem mit geringfügig hochstehenden Klemmnocken 12 versehen, die eine eingeschobene Chipkarte 4 im Aufnahmekanal 5 festsetzen und damit ein ungewolltes Herausrutschen verhindern.

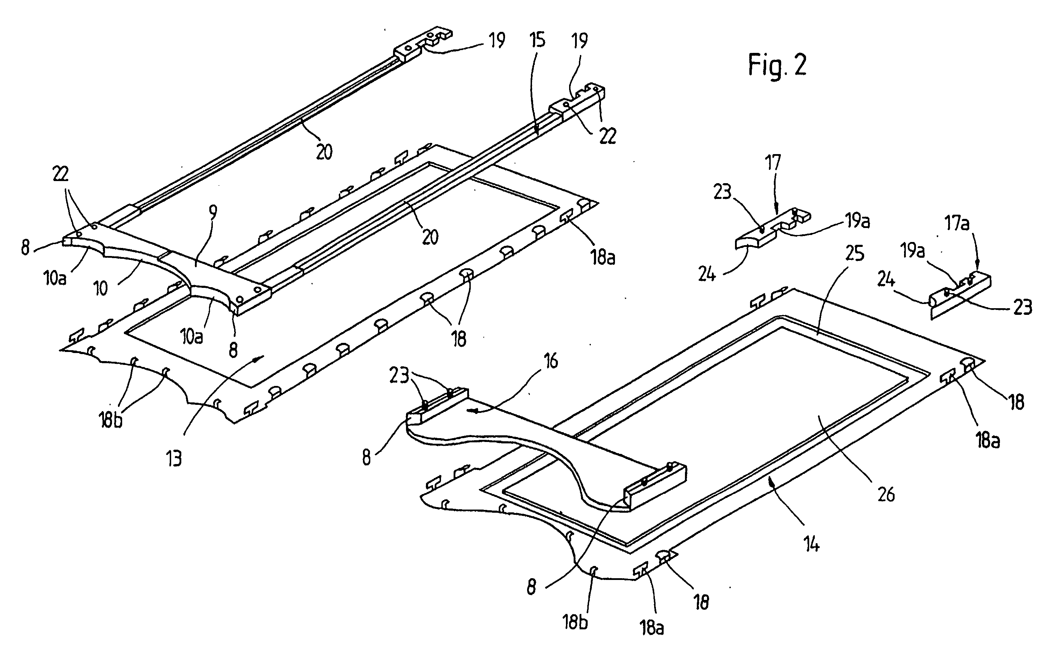

Wie aus Fig. 2 ersichtlich ist, besteht das Gehäuse 1 aus einer oberen Abdeckplatte 13 und einer unteren Abdeckplatte 14, die durch Zwischenelemente 15, 16, 17, 17a miteinander verbunden sind. Die als Blechstanzteile gefertigten Abdeckplatten 13, 14 weisen orthogonal abgewinkelte Krampen 18, 18a, 18b auf, die während der Herstellung der Zwischenelemente 15 bis 17a durch Kunststoff-Spritzgießen von diesen eingeschlossen werden, so daß eine einfache, aber dennoch belastbare Verbindung von Zwischenelementen 15 bis 17a und Abdeckelementen 13, 14 trotz unterschiedlicher Materialien sichergestellt ist.

Das an der oberen Abdeckplatte 13 angeordnete Zwischenelement 15 ist als ein im wesentlichen U-förmiger Rahmen ausgebildet, dessen Schenkeln an ihrer Innenkontur Klemm- und Führungsabschnitte 19, 20 zur Aufnahme einer Leiterplatte 21 aufweisen, während die Basis des Zwischenelements 15 mit den zuvor erwähnten Einlaufschrägen 8, der Ausnehmung 9 sowie den Aussparungen 10, 10a versehen ist. Durch die rahmenartige Ausgestaltung des Zwischenelements 15 ist eine hohe Verwindungssteifigkeit des Gehäuses 1 gewährleistet.

An der dem Aufnahmekanal 5 zugewandten Unterseite des Zwischenelements 15 sind im Seitenbereich der Basis und im Endbereich der Schenkel Öffnungen 22 vorgesehen, die mit korrespondierend ausgebildeten Zapfen 23 an den gegenüberliegenden Zwischenelementen 16 bis 17a fluchten und bei Montage des Adapters in diese eingreifen. Die als Abstandssegmente ausgebildeten Zwischenelemente 16 bis 17a weisen eine der einer Chipkarte 4 annähernd entsprechende Höhe auf und bilden dadurch den Aufnahmekanal 5. Das im Bereich des Einschubschlitzes 3 angeordnete Zwischenelement 16 weist eine Bodenplatte auf, die an ihrer Stirnseite der Kontur der unteren Abdeckplatte 14 folgt und dadurch auch die zuvor erwähnten Flächen 11, auf denen die aus Metall oder Kunststoff bestehenden Klemmnocken 12 als separate Teile oder einstückig ausgebildet angeordnet sind, bildet. Die im Bereich der Steckanschlußbuchse 2 angeordneten Zwischenelemente 17, 17a weisen zu den Klemmabschnitten 19 korrespondierende Klemmabschnitte 19a auf, die zusammen mit den zuvorgenannten die mit der Leiterplatte 21 elektrisch verbundene Steckanschlußbuchse 2 aufnehmen. An der in Einschubrichtung einer Chipkarte 4 vorderen Stirnseite der Zwischenelemente 17, 17a sind Anschläge 24 mit einer an die Eckenform einer Chipkarte 4 angepaßten Kontur vorgesehen, die die Einstecktiefe einer Chipkarte 4 eckseitig begrenzen.

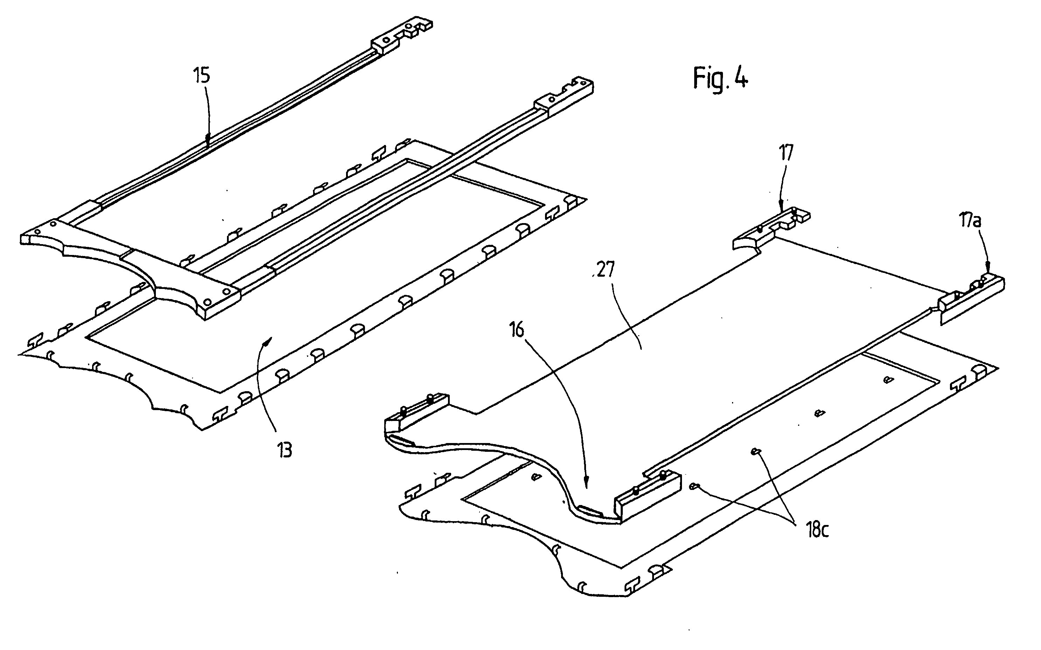

Wie aus Fig. 4 zu entnehmen ist, weist die untere Abdeckplatte 14 eine Vertiefung 25 auf, in der eine Verstärkungsplatte 26 angeordnet ist. Die Befestigung der aus Metall bestehenden Verstärkungsplatte 26, welche die Steifigkeit des Adapters erheblich erhöht, erfolgt dabei über Ultraschallschweißen oder Kleben. In der in Fig. 4 gezeigten alternativen Ausführungsform sind die Zwischenelemente 16 bis 17a einstückig mit einer Bodenplatte 27 ausgebildet, die über Krampen 18c mit der unteren Abdeckplatte 14 verbunden ist. Bei dieser alternativen Ausführungsform wird die notwendige Verwindungssteifigkeit des Gehäuses 1 über die Bodenplatte 27 erreicht, so daß auf die Verstärkungsplatte 26 sowie die dafür erforderliche Vertiefung 25 in der unteren Abdeckplatte 14 bei Bedarf verzichtet werden kann.

Bei Montage des Adapters werden die mit den Zwischenelementen 15 bis 17a versehenen obere und untere Abdeckplatten 13, 14 derart übereinander gelegt, daß die Zapfen 23 in die Öffnungen 22 eingreifen und gleichzeitig die Leiterplatte 21 in den Führungsabschnitten 20 und die Steckanschlußbuchse 2 in den Klemmabschnitten 19, 19a zu liegen kommen. Die durch das Ineinandergreifen der Zapfen 23 und der Öffnungen 22 bereits zentrierten Zwischenelemente 15 bis 17a können dann mittels Kleben oder Ultraschallschweißen verbunden werden. Bei Ausgestaltung der Zapfen 23 und der korrespondierenden Öffnungen 22 in Form einer Steckverbindung kann außer der montagegünstigen Zentrierung der aufeinander anzuordnenden Zwischenelemente 15 bis 17a auch eine endgültige Fixierung dieser erreicht werden, die sich hinsichtlich eines recyclingbedingten Zerlegens auszeichnet.

Der zuvor beschriebene Adapter eignet sich für den Anschluß an eine PCMCIA-Schnittstelle eines Computers oder dergleichen, wobei der Aufnahmekanal 5 für eine nach DIN ISO 7816 genormte Chipkarte 4 ausgestaltet ist. Das an der Oberseite der Chipkarte 4 angeordnete Kontaktfeld 6 kommt bei in den Adapter eingeschobener Chipkarte 4 gegenüber von Kontaktelementen 28 zu liegen, so daß eine Kontaktierung sichergestellt ist. Aufgrund der Eignung des Adapters für eine nach DIN ISO 7816 genormte Chipkarten 4, bei der die Kartenbreite der Breite des nach PCMCIA-Standard genormten Gehäuses 1 entspricht, ist ein seitliches Offenlassen des Aufnahmekanals 5 unerläßlich. Eine dadurch bedingte Beeinträchtigung der Verwindungssteifigkeit und Robustheit des Gehäuses 1 wird durch die Ausgestaltung des oberen Zwischenelements 15 als im wesentlichen U-förmiger Rahmen sowie das Vorsehen der Versteifungsplatte 26 derart minimiert, daß sie in der Praxis weitestgehend ausgeschlossen werden kann. Durch das Vorsehen von Zapfen 23 und dazu korrespondierenden Öffnungen 22 wird eine schnelle und montagerechte Herstellung erzielt, die sich für eine wirtschaftliche Massenfertigung eignet und bei Ausgestaltung als lösbare Steckverbindung zudem recyclingbedingten Anforderungen Rechnung trägt.

### Bezugszeichenliste

- 1: Gehäuse
- 2: Steckanschlußbuchse
- 3: Einschubschlitz
- 4: Chipkarte
- 5: Aufnahmekanal
- 6: Kontaktfeld
- 7: Wandung
- 8: Einlaufschräge
- 9: Ausnehmung
- 10: Aussparung
- 10a: Aussparung
- 11: Fläche
- 12: Klemmnocken
- 13: obere Abdeckplatte
- 14: untere Abdeckplatte
- 15: Zwischenelement
- 16: Zwischenelement
- 17: Zwischenelement
- 17a: Zwischenelement
- 18: Krampen
- 18a: Krampen
- 18b: Krampen
- 18c: Krampen
- 19: Klemmabschnitt
- 19a: Klemmabschnitt
- 20: Führungsabschnitt
- 21: Leiterplatte
- 22: Öffnung
- 23: Zapfen
- 24: Anschlag
- 25: Vertiefung
- 26: Verstärkungsplatte
- 27: Bodenplatte
- 28: Kontaktelemente

## Patentansprüche

1. Adapter zum Kontaktieren von Chipkarten (4), insbesondere mit einem nach dem PCMCIA-Standard genormten Anschluß eines Datenverarbeitungsgeräts, mit einem steckkartenförmigen Gehäuse (1) mit einer oberen Abdeckplatte (13) und einer unteren Abdeckplatte (14), das einen an einer Stirnseite in einen Aufnahmekanal (5) mündenden Einschubschlitz (3) für die Aufnahme einer Chipkarte (4) und ein an der gegenüberliegenden Stirnseite angeordnetes Anschlußfeld (2) aufweist, und mit einer mit dem Anschlußfeld (2) elektrisch verbundenen Leiterplatte (21), die sich parallel zum Aufnahmekanal (5) erstreckt und mit Kontaktelementen (28) zum Kontaktieren der Chipkarte (4) versehen ist, wobei die obere Abdeckplatte (13) und die untere Abdeckplatte (14) zwei getrennte, deckungsgleiche Bauteile sind,
**dadurch gekennzeichnet,**
**daß** zwischen der oberen Abdeckplatte (13) und der unteren Abdeckplatte (14) Zwischenelemente (15, 16 bis 17a) vorgesehen sind, welche diese miteinander verbinden, wobei die obere Abdeckplatte (13) mit einem oberen Zwischenelement (15) und die untere Abdeckplatte (14) mit unteren Zwischenelementen (16 bis 17a) versehen ist, und die die oberen und unteren Zwischenelemente an ihren gegenüberliegenden Berührungsflächen miteinander verbunden sind, und wobei das obere Zwischenelement (15) als im wesentlichen U-förmiger Rahmen ausgebildet ist, dessen Außenkontur der der oberen Abdeckplatte (13) folgt und dessen Innenkontur Klemm- und Führungsabschnitte (19, 20) zur Aufnahme der Leiterplatte (21) zwischen den beiden Schenkeln des Rahmens aufweist.

2. Adapter nach Anspruch 1,
**dadurch gekennzeichnet, daß** an dem oberen Zwischenelement (15) und den unteren Zwischenelementen (16 bis 17a) korrespondierend ausgebildete Zapfen (23) und Öffnungen (22) angeordnet sind.

3. Adapter nach Anspruch 2,
**dadurch gekennzeichnet, daß** das obere Zwischenelement (15) und die unteren Zwischenelemente (16 bis 17a) mit korrespondierend ausgebildeten Zapfen (23) und Öffnungen (22) in Form einer Steckverbindung versehen und lösbar miteinander verbunden sind.

4. Adapter nach einem der Ansprüche 1 bis 3,
**dadurch gekennzeichnet, daß** das obere Zwischenelement (15) und die unteren Zwischenelemente (16 bis 17a) Kunststoff-Spritzteile sind, die mittels Spritzgießen an der jeweiligen oberen Abdeckplatte (13) und unteren Abdeckplatte (14) befestigt sind.

5. Adapter nach Anspruch 4,
**dadurch gekennzeichnet, daß** die obere Abdeckplatte (13) und die untere Abdeckplatte (14) jeweils mit angeformten Krampen (18 bis 18c) versehen sind, die in dem oberen Zwischenelement (15) und in den jeweiligen unteren Zwischenelementen (16 bis 17a) eingegossen sind.

6. Adapter nach einem der Ansprüche 1 bis 5,
**dadurch gekennzeichnet, daß** die dem Aufnahmekanal (5) zugewandte Fläche einer im Bereich des Einschubschlitzes (3) angeordneten Basis des Rahmens (15) an einer Seite mit einer flächigen Ausnehmung (9) versehen ist.

7. Adapter nach einem der Ansprüche 1 bis 6,
**dadurch gekennzeichnet, daß** die unteren Zwischenelemente (16 bis 17a) annähernd die Höhe einer Chipkarte (4) aufweisende Abstandssegmente sind, die im in Einschubrichtung der Chipkarte (4) vorderen Bereich des Gehäuses (1) geschlossene seitliche Wandungen (7) des Einschubschlitzes (3) bilden und die unter seitlichem Freilassen des sich an den Einschubschlitz (3) anschließenden Aufnahmekanals (5) beidseitig des Anschlußfelds (2) angeordnet sind.

8. Adapter nach Anspruch 7,
**dadurch gekennzeichnet, daß** das im Bereich des Einschubschlitzes (3) angeordnete Abstandssegment (16) einstückig mit einer Bodenplatte ausgebildet ist, deren Außenkontur der der unteren Abdeckplatte (14) entspricht.

9. Adapter nach Anspruch 8,
, **dadurch gekennzeichnet, daß** die untere Abdeckplatte (14) mit einer Vertiefung (25) versehen ist, in der eine vorzugsweise metallene Verstärkungsplatte (26) angeordnet ist.

10. Adapter nach Anspruch 7,
**dadurch gekennzeichnet, daß** die Abstandssegmente (16 bis 17a) einstückig mit einer zu der unteren Abdeckplatte (14) deckungsgleichen Bodenplatte (27) ausgebildet sind.

11. Adapter nach einem der Ansprüche 7 bis 10,
**dadurch gekennzeichnet, daß** die beidseitig des Anschlußfeldes (2) angeordneten Abstandssegmente (17, 17a) an ihren gegenüberliegenden Innenflächen Klemmabschnitte (19a) zur Fixierung des Anschlußfeldes (2) aufweisen.

12. Adapter nach einem der Ansprüche 7 bis 11,
**dadurch gekennzeichnet, daß** das im Bereich des Einschubschlitzes (3) angeordnete Abstandssegment (16) mit Einlaufschrägen (8) für die einzuführende Chipkarte (4) versehen ist und daß die beidseitig des Anschlußfeldes (2) angeordneten Abstandssegmente (17, 17a) mit die Einstecktiefe einer Chipkarte (4) eckseitig begrenzenden Anschlägen (24), welche eine an die Eckenform der Chipkarte (4) angepaßte Kontur aufweisen, versehen sind.

13. Adapter nach einem der Ansprüche 1 bis 12,
**dadurch gekennzeichnet, daß** die obere Abdeckplatte (13) an der den Einschubschlitz (3) aufweisenden Stirnseite eine durch mehrere zurückspringende, teilkreisförmige Aussparungen (10, 10a) gebildete Kontur aufweist.

14. Adapter nach Anspruch 13,
**dadurch gekennzeichnet, daß** die untere Abdeckplatte (14) an der den Einschubschlitz (13) aufweisenden Stirnseite in zumindest einem der beiden äußeren teilkreisförmigen Aussparungen (10a) der oberen Abdeckplatte (13) gegenüberliegenden Bereich eine nach Art einer Unterlippe hervorgezogene Fläche (11) aufweist, auf der wenigstens ein Klemmnocken (12) angeordnet ist, durch den zusammen mit den an den Abstandssegmenten (17, 17a) ausgebildeten Anschlägen (24) die Chipkarte (4) sicherbar ist.

15. Adapter nach einem der Ansprüche 1 bis 14,
**dadurch gekennzeichnet, daß** die obere Abdeckplatte (13) und die untere Abdeckplatte (14) aus Metall gefertigt sind.

## Claims

1. Adapter for contacting chip cards (4), in particular with a connection standardised to PCMCIA standard for a data processing device, which has a housing (1) in the shape of a slot-in card with an upper cover plate (13) and a lower cover plate (14) and which has an insertion slot (3) which opens on one end face into a receiving channel (5) for receiving a chip card (4) and a connection field (2) disposed on the opposing end face, and with a printed circuit board (21) which is electrically connected to the connection field (2), extends parallel to the receiving channel (5) and is provided with contact elements (28) for contacting the chip card (4), the upper cover plate (13) and the lower cover plate (14) are two separate congruent components, **characterised in that** between the upper cover plate (13) and the lower cover plate (14) there are provided intermediate elements (15, 16 to 17a) which connect the cover plates to one another, wherein the upper cover plate (13) is provided with an upper intermediate element (15) and the lower cover plate (14) is provided with lower intermediate elements (16 to 17a) and the upper and lower intermediate elements are connected to one another on their opposing contact surfaces, and wherein the upper intermediate element (15) is constructed as a substantially U-shaped frame, the outer contour of which follows that of the upper cover plate (13) and the inner contour of which has clamping and guiding portions (19, 20) to receive the printed circuit board (21) between the two arms of the frame.

2. Adapter as claimed in Claim 1, **characterised in that** lugs (23) and holes (22) of corresponding construction are disposed on the upper intermediate element (15) and the lower intermediate elements (16 to 17a).

3. Adapter as claimed in Claim 2, **characterised in that** the upper intermediate element (15) and the lower intermediate elements (16 to 17a) are provided with lugs (23) and holes (22) of corresponding construction in the form of a plug connection and are releasably connected to one another.

4. Adapter as claimed in any one of Claims 1 to 3, **characterised in that** the upper intermediate element (15) and the lower intermediate elements (16 to 17a) are plastic injection moulded parts which are fixed by means of injection moulding on the respective upper cover plate (13) and lower cover plate (14).

5. Adapter as claimed in Claim 4, **characterised in that** the upper cover plate (13) and the lower cover plate (14) are each provided with integrally moulded clips (18 to 18c) which are cast into the upper intermediate element (15) and into the respective lower intermediate elements (16 to 17a).

6. Adapter as claimed in any one of Claims 1 to 5, **characterised in that** the surface, which faces the receiving channel (5), of a base of the frame disposed in the region of the insertion slot (3) is disposed on one side with a flat recess (9).

7. Adapter as claimed in any one of Claims 1 to 6, **characterised in that** the lower intermediate elements (16 to 17a) are spacer segments which have approximately the height of a chip card (4) and which form lateral walls (7) which are closed in the region of the housing (1) which is at the front in the direction of insertion of the chip card (4), the said spacer segments being disposed on both sides of the connection field (2) and leaving free the receiving channel (5) which adjoins the insertion slot (3).

8. Adapter as claimed in Claim 7, **characterised in that** the spacer segment (16) which is disposed in the region of the insertion slot (3) is constructed integrally with a base plate, the outer contour of which corresponds to that of the lower cover plate (14).

9. Adapter as claimed in Claim 8, **characterised in that** the lower cover plate (14) is provide with a depression (25) in which a preferably metal reinforcing plate (26) is disposed.

10. Adapter as claimed in Claim 7, **characterised in that** the spacer segments (16 to 17a) are constructed integrally with a base plate (27) which is congruent with the lower cover plate (14).

11. Adapter as claimed in any one of Claims 7 to 10, **characterised in that** the spacer segments (17, 17a) which are disposed on both sides of the connection field (2) have clamping portions (19a) on their opposing inner faces for fixing the connection field (2).

12. Adapter as claimed in any one of Claims 7 to 11, **characterised in that** the spacer segment (16) disposed in the region of the insertion slot (3) is provided with lead-in slopes (8) for the chip card (4) to be introduced, and that the spacer segments (17, 17a) disposed on both sides of the connection field (2) are provided with stops (24) which limit the insertion depth of a chip card (4) at the comers and have a contour which is adapted to the shape of the comers of the chip card (4).

13. Adapter as claimed in any one of Claims 1 to 12, **characterised in that** the upper cover plate (13) has on the end face having the insertion slot (3) a contour formed by a plurality of set back partially circular cut-outs (10, 10a).

14. Adapter as claimed in Claim 13, **characterised in that** on the end face having the insertion slot (13), in at least one region lying opposite the two outer partially circular cut-outs (10a) of the upper cover plate (13), the lower cover plate (14) has a surface (11) which is drawn out in the manner of a lower lip and on which there is disposed at least one clamping projection (12) by which together with the stops (24) constructed on the spacer segments (17, 17a) the chip card (4) can be secured.

15. Adapter as claimed in any one of Claims 1 to 14, **characterised in that** the upper cover plate (13) and the lower cover plate (14) are made from metal.

## Revendications

1. Adaptateur pour le contact de cartes à puce (4), en particulier avec une connexion d'un appareil de traitement de données normalisée suivant la norme PCMCIA, avec un boîtier en forme de carte enfichable (1) comportant une plaque de recouvrement supérieure (13) et une plaque de recouvrement inférieure (14) qui comprend une fente d'enfichage (3) débouchant sur un côté frontal dans un canal de logement (5) pour le logement d'une carte à puce (4) et une zone de connexion (2) placée sur le côté frontal opposé, et avec une carte de circuit imprimé (21) raccordée électriquement à la zone de connexion (2) qui s'étend parallèlement au canal de logement (5) et qui est munie d'éléments de contact (28) pour le contact de la carte à puce (4), la plaque de recouvrement supérieure (13) et la plaque de recouvrement inférieure (14) étant deux composants séparés coïncidents, **caractérisé en ce qu'**il est prévu entre la plaque de recouvrement supérieure (13) et la plaque de recouvrement inférieure (14) des éléments intermédiaires (15, 16 à 17a) qui relient celles-ci entre elles, la plaque de recouvrement supérieure (13) étant munie d'un élément intermédiaire supérieur (15) et la plaque de recouvrement inférieure (14) d'éléments intermédiaires inférieurs (16 à 17a) et les éléments intermédiaires supérieurs et inférieurs étant raccordés les uns aux autres au niveau de leurs surfaces de contact opposées, et l'élément intermédiaire supérieur (15) étant configuré comme un cadre sensiblement en forme de U dont le contour extérieur suit celui de la plaque de recouvrement supérieure (13) et dont le contour intérieur comporte des portions de serrage et de guidage (19, 20) pour le logement de la carte de circuit imprimé (21) entre les deux branches du cadre.

2. Adaptateur selon la revendication 1, **caractérisé en ce que** des tenons (23) et des ouvertures (22) configurés de manière correspondante sont placés sur l'élément intermédiaire supérieur (15) et sur les éléments intermédiaires inférieurs (16 à 17a).

3. Adaptateur selon la revendication 2, **caractérisé en ce que** l'élément intermédiaire supérieur (15) et les éléments intermédiaires inférieurs (16 à 17a) sont munis de tenons (23) et d'ouvertures (22) configurés de manière correspondante sous forme d'une connexion à fiches et sont reliés les uns aux autres de manière amovible.

4. Adaptateur selon l'une quelconque des revendications 1 à 3, **caractérisé en ce que** l'élément intermédiaire supérieur (15) et les éléments intermédiaires inférieurs (16 à 17a) sont des pièces en matière plastique moulées par injection qui sont fixées à la plaque de recouvrement supérieure (13) et à la plaque de recouvrement inférieure (14) par moulage par injection.

5. Adaptateur selon la revendication 4, **caractérisé en ce que** la plaque de recouvrement supérieure (13) et la plaque de recouvrement inférieure (14) sont munies chacune de crochets isolants moulés (18 à 18c) qui sont coulés dans l'élément intermédiaire supérieur (15) et dans les éléments intermédiaires inférieurs respectifs (16 à 17a).

6. Adaptateur selon l'une quelconque des revendications 1 à 5, **caractérisé en ce que** la surface tournée vers le canal de logement (5) d'une base du cadre (15) disposée dans la zone de la fente d'enfichage (3) est munie d'un côté d'un creux plan (9).

7. Adaptateur selon l'une quelconque des revendications 1 à 6, **caractérisé en ce que** les éléments intermédiaires inférieurs (16 à 17a) sont des segments d'écartement ayant à peu près la hauteur d'une carte à puce (4) qui forment des parois (7) latérales fermées de la fente d'enfichage (3) dans la zone avant du boîtier (1) dans le sens d'enfichage de la carte à puce (4) et qui sont disposés de chaque côté de la zone de connexion (2) en libérant latéralement le canal de logement (5) raccordé à la fente d'enfichage (3).

8. Adaptateur selon la revendication 7, **caractérisé en ce que** le segment d'écartement (16) disposé dans la zone de la fente d'enfichage (3) est formé en une seule partie avec une plaque de base dont le contour extérieur correspond à celui de la plaque de recouvrement inférieure (14).

9. Adaptateur selon la revendication 8, **caractérisé en ce que** la plaque de recouvrement inférieure (14) est munie d'une cavité (25) dans laquelle est placée une plaque de renforcement (26) de préférence métallique.

10. Adaptateur selon la revendication 7, **caractérisé en ce que** les segments d'écartement (16 à 17a) sont formés en une seule partie avec une plaque de base (27) coïncidente avec la plaque de recouvrement inférieure (14).

11. Adaptateur selon l'une quelconque des revendications 7 à 10, **caractérisé en ce que** les segments d'écartement (17, 17a) disposés de chaque côté de la zone de connexion (2) comportent sur leurs surfaces intérieures opposées des portions de serrage (19a) pour la fixation de la zone de connexion (2).

12. Adaptateur selon l'une quelconque des revendications 7 à 11, **caractérisé en ce que** le segment d'écartement (16) disposé dans la zone de la fente d'enfichage (3) est muni de plans inclinés d'introduction (8) pour la carte à puce (4) à introduire et **en ce que** les segments d'écartement (17, 17a) disposés de chaque côté de la zone de connexion (2) sont munis de butées (24) limitant la profondeur d'enfichage d'une carte à puce (4) du côté de l'angle qui présentent un contour adapté à la forme d'angle de la carte à puce (4).

13. Adaptateur selon l'une quelconque des revendications 1 à 12, **caractérisé en ce que** la plaque de recouvrement supérieure (13) présente un contour formé par plusieurs évidements (10, 10a) en retrait en forme de cercle partiel sur le côté frontal comportant la fente d'enfichage (3).

14. Adaptateur selon la revendication 13, **caractérisé en ce que** la plaque de recouvrement inférieure (14) présente, sur le côté frontal comportant la fente d'enfichage (13) dans au moins une zone opposée aux deux évidements (10a) extérieurs en forme de cercle partiel de la plaque de recouvrement supérieure (13), une surface (11) faisant saillie à la manière d'une lèvre inférieure sur laquelle est monté au moins un ergot de serrage (12) au moyen duquel la carte à puce (4) peut être protégée conjointement avec les butées (24) formées sur les segments d'écartement (17, 17a).

15. Adaptateur selon l'une quelconque des revendications 1 à 14, **caractérisé en ce que** la plaque de recouvrement supérieure (13) et la plaque de recouvrement inférieure (14) sont fabriquées en métal.
